# EUROPEAN PATENT APPLICATION

(11) **EP 3 800 650 A1**
(43) Date of publication of application: **07.04.2021**
(21) Application number: 20199077.7
(22) Date of filing: 29.09.2020
(51) Int. Cl.: H01F 7/08, H01F 7/16, H01F 7/129, H01F 7/126, F16K 31/06, F02M 26/00, F16K 27/02, F16K 27/04

(54) **DUAL-FLANGED UNITARY POLE PIECE AND ELECTROMAGNETIC ACTUATOR INCLUDING THE DUAL-FLANGED UNITARY POLE PIECE**

(30) Priority: 01.10.2019 US 201962908783 P
(71) Applicant: HUSCO Automotive Holdings LLC, Waukesha, WI 53188 (US)
(72) Inventor: HEIDEMANN, Brian, Lake Mills, WI 53551 (US); Pellmann, Matt, Summit, WI 53066 (US)
(74) Representative: Wynne-Jones IP Limited

(57) **Abstract**

The present disclosure provides systems and methods for an electromagnetic actuator having a unitary pole piece arranged within and coupled to a housing. The electromagnetic actuator can include the housing, the unitary pole piece, an armature received within the unitary pole piece, and an end cap. The unitary pole piece is structured to provide a reduction in air gaps within the electromagnetic actuator.

## Description

### CROSS-REFERENCES TO RELATED APPLICATIONS

The present application is based on and incorporates herein by reference in its entirety, United States Provisional Patent Application No. 62/908,783, filed on October 1, 2019, and entitled "Systems and Methods for a Solenoid having a Dual-Flanged Pole Piece and an Integral End Cap."

### STATEMENT REGARDING FEDERALLY SPONSORED RESEARCH

Not Applicable.

### BACKGROUND

Generally, electromagnetic actuators may include an armature and a pole piece within a housing.

### BRIEF SUMMARY

The present disclosure relates generally to systems and methods for an electromagnetic actuator having a dual-flanged unitary pole piece. The dual-flanged unitary pole piece can provide a reduction in air gaps as well as a reduction in a number of magnetic flux carrying components arranged within the electromagnetic actuator.

In some aspects, the present disclosure provides a unitary pole piece for an electromagnetic actuator. The unitary pole piece can include a first end defining a substantially open top side and a second end opposite the first end. A first flange can be arranged adjacent to and extend radially outward from the first end. A second flange can extend radially outward from the second end. The unitary pole piece can also include an armature recess extending at least partially through the unitary pole piece from the substantially open top side towards the second end. The armature recess can be configured to slidably receive an armature.

According to some aspects, an armature recess of a unitary pole piece can define a base configured to provide a first end stop for an armature.

According to some aspects, a first sidewall can extend between a first flange and a second flange of a unitary pole piece, the first sidewall can define a choke portion.

According to some aspects, a protrusion can extend axially away from a second end of a unitary pole piece, the protrusion can be configured to secure a valve body to the unitary pole piece when the protrusion is crimped around a valve body.

According to some aspects, a unitary pole piece can be arranged within a housing of an electromagnetic actuator.

According to some aspects, a second flange of a unitary pole piece can be configured to provide a press fit to an inner surface of a housing.

According to some aspects, one of a first flange or a second flange of a unitary pole piece can define a stepped profile.

According to some aspects, a stepped profile of one of the first flange or the second flange can be configured to provide an end stop for a housing when an electromagnetic actuator is in an assembled configuration.

According to some aspects, an electromagnetic actuator can include an end cap coupled to a first end of a unitary pole piece.

According to some aspects, a unitary pole piece can include a second sidewall protruding axially above a first flange to receive an end cap.

According to some aspects, an end cap can define a seal to an open top side of a unitary pole piece.

According to some aspects, an end cap can be press-fit to an outer surface of an open top side of a unitary pole piece.

According to some aspects, an end cap can define a second end stop for an armature.

According to some aspects, an electromagnetic actuator can include a bobbin positioned around an armature and arranged between a first flange and a second flange of a unitary pole piece.

According to some aspects, a bobbin can be insert molded onto a unitary pole piece.

In some aspects, the present disclosure provides an electromagnetic actuator. The electromagnetic actuator can include a housing and a unitary pole piece arranged within the housing. The unitary pole piece can include a first end defining a substantially open top side, a second end opposite the first end, and a first flange at the first end and a second flange at the second end. The first flange and the second flange can extend radially outward from the unitary pole piece. The unitary pole piece can also include an armature recess extending from the substantially open top side towards the second end. The electromagnetic actuator can also include an armature slidably received within the armature recess. The armature can be selectively movable between a first end position and a second end position. A base of the armature recess can define the first end position for the armature.

According to some aspects, an end cap can be coupled to a first end of a unitary pole piece.

According to some aspects, an end cap can define a seal to a substantially open top side of a unitary pole piece.

According to some aspects, an end cap can define a second end position for an armature.

According to some aspects, an end cap can be press-fit to an outer surface of a substantially open top side of a unitary pole piece.

According to some aspects, a bobbin can be positioned around an armature and arranged between a first flange and a second flange of a unitary pole piece.

According to some aspects, a bobbin can be insert molded onto a unitary pole piece.

According to some aspects, a second flange of a unitary pole piece can define a stepped profile. The stepped profile can provide a mounting surface for a housing pressed thereon.

According to some aspects, a first flange and a second flange can extend radially outward from a unitary pole piece to meet an inner surface of a housing.

According to some aspects, one of a first flange or a second flange can define a press-fit between a housing and a unitary pole piece.

In some aspects, the present disclosure provides a method of manufacturing an electromagnetic actuator. The method can include providing a unitary pole piece including a sidewall, a first flange, and a second flange axially separated from the first flange. The first flange and the second flange can extend radially outward from the sidewall. The method can further include insert molding a bobbin between the first flange and the second flange. The bobbin can define a coil bay configured to receive a coil winding. The method can further include pressing a housing onto the unitary pole piece such that a press fit is formed between the housing and at least one of the first flange or the second flange.

According to some aspects, a method of manufacturing an electromagnetic actuator can include pressing an end cap onto a unitary pole piece such that a press fit is formed between the end cap and the unitary pole piece.

The foregoing and other aspects and advantages of the disclosure will appear from the following description. In the description, reference is made to the accompanying drawings which form a part hereof, and in which there is shown by way of illustration a preferred configuration of the disclosure. Such configuration does not necessarily represent the full scope of the disclosure, however, and reference is made therefore to the claims and herein for interpreting the scope of the disclosure.

### BRIEF DESCRIPTION OF DRAWINGS

The invention will be better understood and features, aspects and advantages other than those set forth above will become apparent when consideration is given to the following detailed description thereof. Such detailed description makes reference to the following drawings.
FIG. 1 is a top, front, left isometric view of an electromagnetic actuator according to aspects of the present disclosure.
FIG. 2 is a top, back, right isometric view of the electromagnetic actuator of FIG. 1.
FIG. 3 is a top view of the electromagnetic actuator of FIG. 1.
FIG. 4 is a cross-sectional view of the electromagnetic actuator of FIG. 3 taken along line 4-4.
FIG. 5 is a cross-sectional view of the electromagnetic actuator of FIG. 3 taken along line 5-5.
Fig. 6 is an exemplary magnetic flux density contour plot of the electromagnetic actuator of FIG. 1.

### DETAILED DESCRIPTION

Before any aspect of the present disclosure are explained in detail, it is to be understood that the present disclosure is not limited in its application to the details of construction and the arrangement of components set forth in the following description or illustrated in the following drawings. The present disclosure is capable of other configurations and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use aspects of the present disclosure. Various modifications to the illustrated configurations will be readily apparent to those skilled in the art, and the generic principles herein can be applied to other configurations and applications without departing from aspects of the present disclosure. Thus, aspects of the present disclosure are not intended to be limited to configurations shown, but are to be accorded the widest scope consistent with the principles and features disclosed herein. The following detailed description is to be read with reference to the figures, in which like elements in different figures have like reference numerals. The figures, which are not necessarily to scale, depict selected configurations and are not intended to limit the scope of the present disclosure. Skilled artisans will recognize the non-limiting examples provided herein have many useful alternatives and fall within the scope of the present disclosure.

The use herein of the term "axial" and variations thereof refers to a direction that extends generally along an axis of symmetry, a central axis, or an elongate direction of a particular component or system. For example, an axially-extending structure of a component may extend generally along a direction that is parallel to an axis of symmetry or an elongate direction of that component. Similarly, the use herein of the term "radial" and variations thereof refers to directions that are generally perpendicular to a corresponding axial direction. For example, a radially extending structure of a component may generally extend at least partly along a direction that is perpendicular to a longitudinal or central axis of that component. The use herein of the term "circumferential" and variations thereof refers to a direction that extends generally around a circumference or periphery of an object, around an axis of symmetry, around a central axis, or around an elongate direction of a particular component or system.

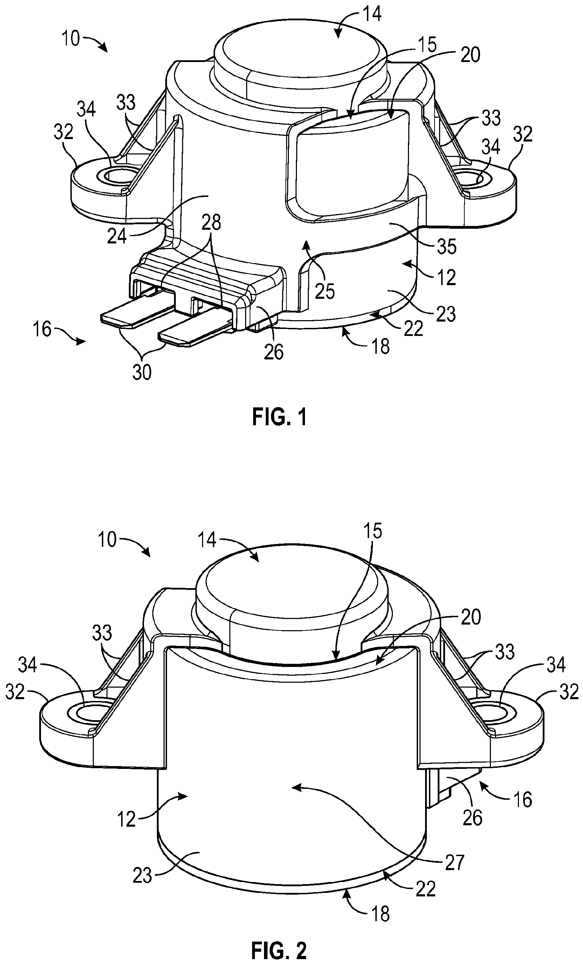

FIGS. 1-3 illustrate an electromagnetic actuator 10 according to aspects of the present disclosure. The electromagnetic actuator 10 can include a housing 12, an end cap 14, a connector 16, and a unitary pole piece 18. The housing 12 can define a generally cylindrical shape and can be fabricated from a magnetic material (e.g., magnetic steel, iron, nickel, etc.). In other non-limiting examples, the housing 12 may define another shape, as desired. In the illustrated non-limiting example, the housing 12 can be formed via a rolled metal plate or sheet to form a cylindrical housing. In the illustrated non-limiting example, the housing 12 can define a uniform thickness. The housing 12, when rolled, can therefore have a seam (not shown) that extends axially from a first side 20 of the housing 12 (e.g., a top side from the perspective of FIGS. 1-2) to a second side 22 (e.g., a bottom side from the perspective of FIGS. 1-2), opposite the first side 20. In other non-limiting examples, the housing 12 can be seamless and formed from an extruded pipe or a rolled pipe that can be welded thereafter. In the illustrated non-limiting example, the housing 12 of the electromagnetic actuator 10 can define a purely cylindrical shape. In some non-limiting examples, the housing 12 can be deep-drawn to provide an end cap (i.e., the housing could be manufactured to include an integral end cap).

The end cap 14 can substantially cover a top side 15 (e.g., from the perspective of FIGS. 1-3) of the electromagnetic actuator 10. As will be described herein, the end cap 14 can seal, or otherwise prevent fluid leakage paths from, the top side of the electromagnetic actuator 10. The end cap 14 can also wrap around from the top side of the electromagnetic actuator 10 and at least partially cover an outer surface 23 of the housing 12. In the illustrated non-limiting example, the end cap 14 can extend from the first side 20 of the housing 12, towards the second side 22, thereby defining a sidewall 24 of the end cap 14. The sidewall 24 can extend circumferentially around at least a portion of the outer surface 23 of the housing 12. For example, the sidewall 24 can at least partially cover a front side 25 (e.g., from the perspective of FIG. 1) of the housing 12. In the illustrated non-limiting example, the end cap 14 can also provide a substantially open back side 27 (e.g., from the perspective of FIG. 2) of the housing 12, thus leaving approximately half of the outer surface 23 housing 12 uncovered by the end cap 14. The sidewall 24 of the end cap 14 can be positioned to cover the seam (not shown) on the housing 12. For example, the sidewall 24 can prevent contaminates from entering the seam of the housing 12.

In the illustrated non-limiting example, a contact cover 26 can be formed into the end cap 14. The contact cover 26 can be positioned adjacent to the second side 22 of the housing 12 when the end cap 14 is installed onto the housing 12, and extend radially outward from the sidewall 24. The contact cover 26 can include one or more openings or cutouts 28 formed therein. In the illustrated non-limiting example, the contact cover 26 includes a pair of cutouts 28, one for each electrical contact 30 that extend from the connector 16. In some non-limiting examples, the contact cover 26 may include more or less than two cutouts to corresponding with any number of electrical contacts 30 formed in the connector 16. In the illustrated non-limiting example, the contact cover 26 can at least partially cover the electrical contacts 30. The cutouts 28 can provide separation between the electrical contacts 30. The electrical contacts 30 can be fabricated from an electrically conductive material (e.g., aluminum, copper, etc.). In operation, the electrical contacts 30 can provide electrical communication between a controller (not shown) and the wire coil 80 arranged within the housing 12.

In the illustrated non-limiting example, the end cap 14 can also include one or more mounting flanges 32 extending radially outwardly from the outer surface 23 of the housing 12. The mounting flanges 32 can be attached to the end cap 14 via one or more angled brackets 33. The mounting flange 32 can include fastener holes 34 extending axially therethrough, which are each configured to receive a corresponding bolt or fastening element to secure the end cap 14 and the electromagnetic actuator 10 to a mounting structure (e.g., a manifold, a valve block, etc.). In the illustrated non-limiting example, the mounting flanges 32 can be arranged on circumferentially-opposing sides of the end cap 14 (e.g., the mounting flanges 32 may be circumferentially separated in approximately 180° increments).

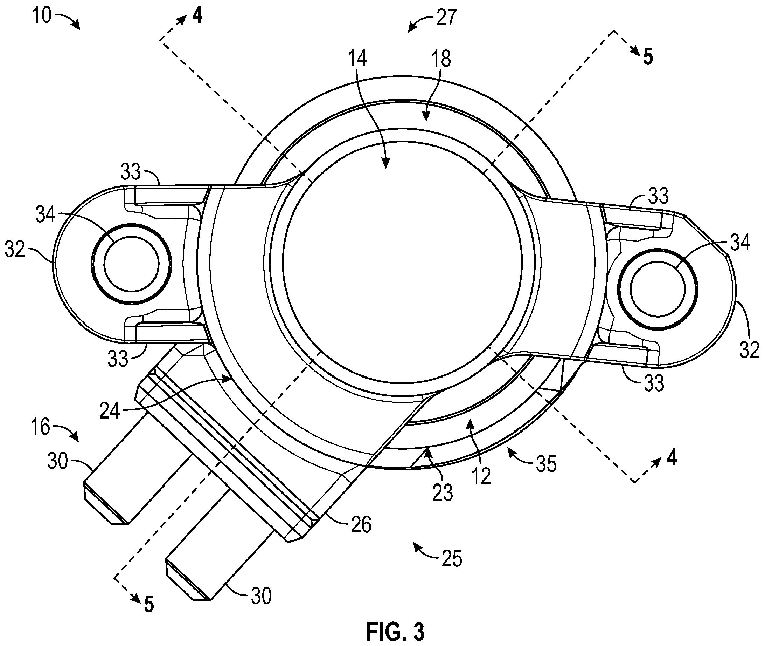

With specific reference to FIGS. 1 and 3, the sidewall 24 can be attached to at least one mounting flange 32 and extend circumferentially around at least a portion of the outer surface 23 of the housing 12 towards the other mounting flange 32. In the illustrated non-limiting example, a circumferentially extending arm 35 can circumferentially extend from the sidewall 24 to one of the mounting flanges 32. In that way, the circumferentially extending arm 35 can attach the sidewall 24 to one of the mounting flanges 32. With specific reference to FIGS. 2 and 3, the positioning of the mounting flanges 32 can define a circumferential space therebetween. In the illustrated non-limiting example, the circumferential space between the two mounting flanges 32 can be devoid of material. For example, the end cap 14 can expose a portion of the outer surface 23 of the housing 12 that is substantially the same as the circumferential space between the two mounting flanges 32.

In other non-limiting examples, the end cap 14 can include more or less than two mounting flanges 32 arranged circumferentially in any increments around the outside of the housing 12. In the illustrated non-limiting example, the end cap 14 can include the sidewall 24, contact cover 26, mounting flanges 32, angled brackets 33, and circumferentially extending arm 35 as a single unitary component.

The end cap 14 can comprise a thermoplastic material. The end cap 14 can be manufactured separately from the housing 12 or unitary pole piece 18 to be coupled thereto during assembly. The end cap 14 can be manufactured in an injection molding process and the end cap, including the sidewall 24, contact cover 26, flanges 32, and arm 35, can be formed as a unitary component.

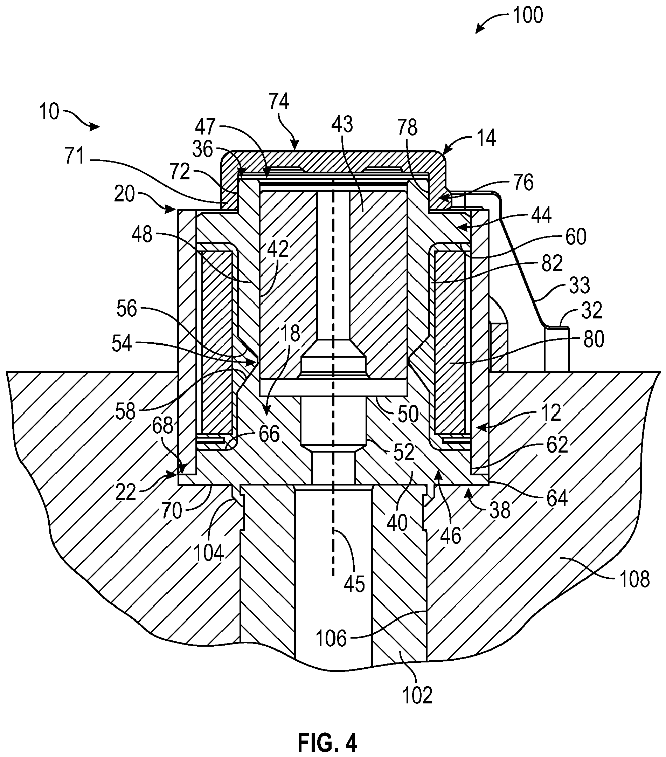

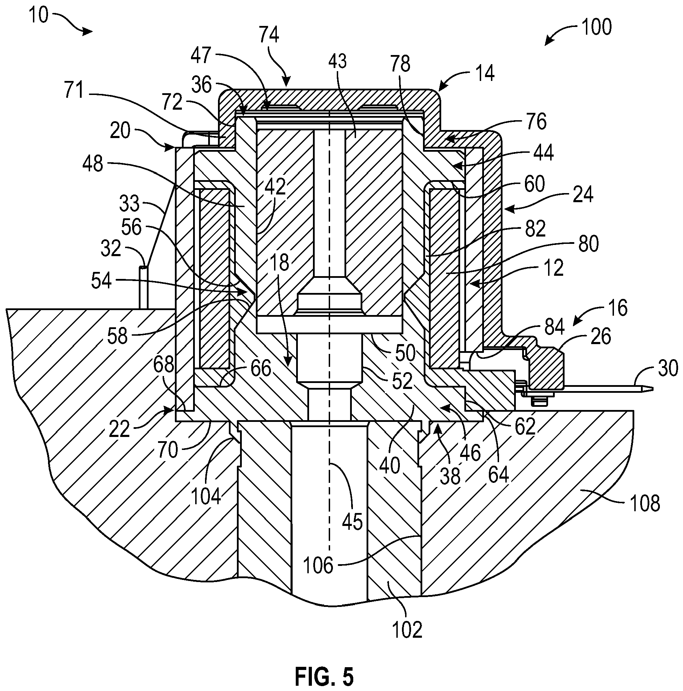

Turning now to FIGS. 4 and 5, the unitary pole piece 18 can be fabricated from a single piece of magnetic material (e.g., magnetic steel, iron, nickel, etc.). The unitary pole piece 18 can include a first end 36, a second end 38 opposite the first end 36, and a body 40. The first end 36 can be arranged adjacent to the end cap 14, when assembled. The body 40 of the unitary pole piece 18 can define a substantially cylindrical shape and can extend axially from the first end 36 to the second end 38.

The unitary pole piece 18 can include an armature recess 42. The first end 36 of the unitary pole piece 18 can define a substantially open end. For example, the armature recess 42 can extend at least partially through the body 40 of the unitary pole piece 18 from the first end 36 towards the second end 38. The armature recess 42 can define an interior cavity extending from an opening 47 at the first end 36 towards the second end 38 of the unitary pole piece 18. The armature recess 42 can also define a first sidewall 48 and a base 50. The first sidewall 48 of the unitary pole piece 18 can extend axially between the first end 36 toward the second end 38, terminating at the base 50 where the profile of the unitary pole piece 18 becomes substantially thicker within the body 40 towards the second end 38. The base 50 of the armature recess 42 extends radially inward from the first sidewall 48. The base 50 of the armature recess 42 also includes a pole piece aperture 52 extending from the base 50 of the armature recess 42 to the second end 38 of the unitary pole piece 18. The pole piece aperture 52 can be centrally positioned in the unitary pole piece 18 and provide fluid communication (e.g., of a process fluid) to the armature recess 42.

In the illustrated non-limiting example, the armature recess 42 can receive an armature 43. The armature 43 can slide between two or more positions within the armature recess 42. The armature 43 can be fabricated from a magnetic material (e.g., magnetic steel, iron, nickel, etc.). The armature 43 can include a central aperture extending axially through the armature 43 that can provide fluid communication between opposing ends thereof. In the illustrated non-limiting example, the housing 12, the end cap 14, the unitary pole piece 18, and the armature 43 may define a common central axis 45.

The first sidewall 48 of the unitary pole piece 18 can define a choke portion 54. The choke portion 54 may define a radial recess, or reduction in radial thickness, of the first sidewall 48. The choke portion 54 is dimensioned to ensure that magnetic saturation occurs in the choke portion 54 during operation of the electromagnetic actuator 10. The illustrated first sidewall 48 includes a first tapered surface 56 and a second tapered surface 58 with the choke portion 54 arranged therebetween. The first tapered surface 56 and the second tapered surface 58 can both taper toward the choke portion 54 thereby forming a generally V or U-shaped radial recess in the first sidewall 48.

Referring still to FIGS. 4 and 5, the unitary pole piece 18 can be a dual-flanged unitary pole piece and include a first flange 44 and a second flange 46. The first flange 44 may extend radially outward from a distal end of the first sidewall 48 to meet an inner surface of the housing 12. The first flange 44 can be arranged adjacent to the first end 36 of the unitary pole piece 18. The second flange 46 may extend radially outward from a distal end of the body 40 near the second end 38 of the unitary pole piece 18 to meet an inner surface of the housing 12. In the illustrated non-limiting example, the first flange 44 is arranged axially below the first end 36 of the unitary pole piece 18. The first flange 44 or the second flange 46 can define a rectangular profile. In the illustrated non-limiting example, the first flange 44 defines a substantially rectangular cross-sectional profile. The first flange 44 can include a first bobbin surface 60 extending substantially perpendicularly from the first sidewall 48. In some non-limiting examples, the first flange 44 or the second flange 46 can define a stepped profile. In the illustrated non-limiting example, the second flange 46 defines a stepped profile including a first flanged portion 62 defining a first diameter and a second flanged portion 64 defining a second diameter. The second flanged portion 64 can define a larger diameter than the first flanged portion 62. The first flanged portion 62 can include a second bobbin surface 66 extending substantially perpendicularly from the body 40 of the unitary pole piece 18. The second flanged portion 64 can include a housing surface 68 extending substantially perpendicularly from the first flanged portion 62. When assembled, the housing 12 can engage the housing surface 68 such that the housing surface 68 provides an end stop for the housing 12 when the housing 12 is pressed onto the unitary pole piece 18. The first flange 44 and the second flange 46 can be dimensioned to provide a clearance fit or a press fit with the housing 12. In the illustrated non-limiting example, the first flange 44 can define a clearance fit with the housing and the second flange 46 can define a press fit with the housing.

The second flange 46 can include a mounting surface 70 configured to engage a structure that the electromagnetic actuator 10 can be coupled to in application. The mounting surface 70 can extend substantially perpendicularly from the second end 38 of the unitary pole piece 18 toward the second flanged portion 64. That is, the mounting surface 70 may extend radially outward from a distal end of the unitary pole piece 18.

In the illustrated non-limiting example, the unitary pole piece 18 can include an outer surface 72. The outer surface 72 can be defined by a second sidewall 71 that extends axially above (e.g., from the perspective of FIGS. 4-5) the first flange 44 to the first end 36 of the unitary pole piece 18. For example, the first flange 44 may not be at an end most portion of the unitary pole piece 18. That is, the first flange 44 can be spaced an axial distance away from the first end 36 of the unitary pole piece 18, such that the second sidewall 71 protrudes above the first flange 44 to form the outer surface 72 in which the end cap 14 may engage. When assembled, the end cap 14 can engage the outer surface 72 when the end cap 14 is pressed onto the unitary pole piece 18. The central portion of the end cap 14 can define a substantially "cup-like" profile. That is, the central portion of the end cap 14 can define a cylindrical cup shape with a closed end 74 (e.g., the upper end from the perspective of FIGS. 4-5) and an open end 76 (e.g., the lower end from the perspective of FIGS. 4-5) opposite the closed end 74. The end cap 14 can include a pole piece recess 78 extending from the open end 76 towards the closed end 74.

The end cap 14 can provide a seal for the opening 47 of the unitary pole piece 18. In the illustrated non-limiting example, the first end 36 of the unitary pole piece 18 can define a press-fit with the end cap 14 when the end cap 14 is installed thereon. For example, an inner surface of the pole piece recess 78 in the end cap 14 can engage with the outer surface 72 of the unitary pole piece 18 to provide a seal therebetween, thereby preventing fluid leakage out of (or otherwise prevent fluid leakage paths from) the armature recess 42. In some non-limiting examples, the inner surface of the pole piece recess 78 can include an o-ring groove to receive an o-ring to provide a seal between the unitary pole piece 18 and the end cap 14. In other non-limiting examples, the outer surface 72 of the unitary pole piece can include an o-ring groove to receive an o-ring to provide a seal between the unitary pole piece 18 and the end cap 14.

The end cap 14 and the armature recess 42 may completely enclose or seal the armature 43 therein. That is, the armature recess 42 may be sealed behind the armature 43 and in front of the armature 43 by a continuous surface defined by the unitary pole piece 18. Specifically, the end cap 14, the first sidewall 48, the second sidewall 71, and the mounting surface 70 define a series of surfaces or seal interfaces. In application, the electromagnetic actuator 10 may be mounted to a structure such that a seal is formed between the mounting surface 70 and the structure. Thus, when installed, the surfaces and seal interfaces defined along the mounting surface 70, the first sidewall 48, the second sidewall 71, and the end cap 14 can completely seal the armature recess 42 and the armature 43 slidably arranged therein.

With continued reference to FIGS. 4 and 5, the electromagnetic actuator 10 can include a wire coil 80 arranged within the housing 12. The wire coil 80 can be wrapped around a bobbin 82 dimensioned to position the wire coil 80 within the housing 12 such that, when assembled, the wire coil 80 extends at least partially around the armature 43. The wire coil 80 can be fabricated, for example, from a copper coil that can be configured to produce a magnetic field, and thereby apply a force to the armature 43, in response to a current being applied to the wire coil 80. The magnitude of the magnetic field, and the force, produced by the wire coil 80 can be determined by the magnitude of the current applied to the wire coil 80. As described above, the electromagnetic actuator 10 may be in electrical communication with a controller (not shown) via the electrical contacts 30. In some embodiments, the controller (not shown) can be configured to selectively apply a current to the wire coil 80 at a desired magnitude.

Since the armature 43 can be slidably received within the armature recess 42 defined by the unitary pole piece 18, the armature 43 can be selectively moveable axially within the armature recess 42 between one or more positions in response to the force produced by the magnetic field of the wire coil 80. The end cap 14 can define a first end stop for the armature 43 when the armature 43 is in a first end position and the unitary pole piece 18 can define a second end stop for the armature 43 when the armature 43 is in a second end position. For example, the inside of the central "cup shaped" portion of the end cap 14 can define the first end stop for the armature 43. The base 50 of the armature recess 42 in the unitary pole piece 18 can provide a second end stop for the armature 43 therein. Therefore, the armature 43 can be axially moved within the armature recess 42 between the first end stop provided by the end cap 14 and the second end stop provided by the unitary pole piece 18.

The bobbin 82 can be fabricated from a non-magnetic material (e.g., plastic). In the illustrated non-limiting example, the bobbin can be formed using an insert molding process. For example, the unitary pole piece 18 and electrical contacts 30 can be placed into a mold. Then the non-magnetic material can be injected into the mold, specifically, injected between the radial recess formed by the area between the first bobbin surface 60 of the first flange 44 and the second bobbin surface 66 of the second flange 46, thereby forming the bobbin 82. The bobbin 82 can define a coil bay and the wire coil 80 can be wound around the bobbin 82 within the coil bay.

Referring now to FIG. 5, the housing 12 can include an opening 84 at a second side 22 of the housing. The opening 84 provided in the housing can be rectangular or "D-shaped" to provide a pass-through for the electrical contacts 30 extending radially outward from the bobbin 82. The opening 84 can be defined by the gap formed between the housing surface 68 of the second flange 46 and the upper portion (e.g., from the perspective of FIG. 5) of the opening 84 in the housing 12. The electrical contacts 30 pass through, and under, the contact cover 26 protruding radially outward from the sidewall 24 of the end cap 14.

In operation, the electromagnetic actuator 10 may be utilized, for example, as a variable force solenoid, and/or the electromagnetic actuator 10 may be integrated into a control valve arrangement. In either case, the electromagnetic actuator 10 may be coupled to an application structure 102. In some non-limiting examples, the application structure 102 may be a valve body 102.

One non-limiting application where the electromagnetic actuator 10 can be integrated into a control valve 100 will be described with reference to FIGS. 4-5. As shown in FIGS. 4 and 5, the electromagnetic actuator 10 can be integrated into a control valve 100. The control valve 100 can include a valve body 102. The valve body 102 can be coupled to the unitary pole piece 18. The second end 38 of the unitary pole piece 18 can include a body protrusion 104 extending away from the otherwise flush mounting surface 70. It is to be understood that the body protrusion 104 would generally define a straight profile. In the illustrated examples of FIG. 4 and 5, the body protrusion 104 defines a generally bent profile, after undergoing a crimping process. When assembled, the valve body 102 can be positioned within the body protrusion 104 against the mounting surface 70 at the second end 38 of the unitary pole piece 18. The body protrusion 104 can them be crimped to secure, or otherwise couple, the valve body 102 thereto. The design of the electromagnetic actuator 10 enables the valve body 102 to only engage the second end 38 of the unitary pole piece 18 thereby simplifying the assembly of the control valve 100.

During installation, the valve body 102 can be inserted within a bore 106 defined by, for example, a mounting structure 108. In one embodiment, the mounting structure 108 may be in the form of a mounting structure 108. The valve body 102 can be inserted into the bore 106 until the mounting surface 70 of the second flange 46 engages the mounting structure 108. That is, the mounting surface 70 of the second flange 46 can act as a stop for the control valve 100 and define a depth that the valve body 102 is inserted into the bore 106. With the valve body 102 inserted into the bore 106, in some embodiments, a fastener (e.g., a bolt) can be installed to secure the control valve 100 onto the mounting structure 108. The fastener (not shown) can be inserted through the fastener holes 34 of the mounting flanges 32 to engage the end cap 14 to apply an installation force that axially forces the end cap down, thereby axially forcing the electromagnetic actuator 10 down, onto the mounting structure 108. In the illustrated embodiment, the installation force may force the mounting surface 70 into engagement with the mounting structure 108, thereby providing a seal therebetween.

In conventional systems, an electromagnetic actuator may include a pole piece and a c-pole, which are separated axially such that a gap exists therebetween. The use of the pole piece and c-pole as separate components may lead to misalignment between these components during manufacture or operation, and may also further complicate the assembly process. Any misalignment between the pole piece and c-pole can lead to armature side loading and armature wear, or tipping, which can lead to increased hysteresis. As described above, the present disclosure provides an electromagnetic actuator 10 having a unitary pole piece 18. The use of a unitary pole piece 18 eliminates any potential misalignment between a pole piece and a c-pole as they are fabricated from a single component. Thus, the systems and methods for an electromagnetic actuator having a unitary pole piece described herein may eliminate or reduce armature wear, or tipping, and increased hysteresis due to pole piece/c-pole misalignment.

Further, the unitary pole piece reduces the number of components. For example, in conventional systems, an electromagnetic actuator may include end plates, or otherwise a valve body or application structure, which are separated axially from the pole piece such that the potential for an air gap exists therebetween. The end plates traditionally provide one of the two end stops for the armature. As described above, the present disclosure provides an electromagnetic actuator 10 having a unitary pole piece 18. The unitary pole piece 18 provides an end stop for the armature 43 by providing an internal cavity defined by the armature recess 42, where a base 50 of the armature recess 42 provides one of the end stops for the armature 43. Thus, the systems and methods for an electromagnetic actuator having a unitary pole piece described herein may eliminate air gaps that exist in conventional electromagnetic actuators and reduce the overall magnetic flux carrying components. That is, the electromagnetic actuator of the present disclosure includes three magnetic flux carrying components: the housing 12, the unitary pole piece 18, and the armature 43.

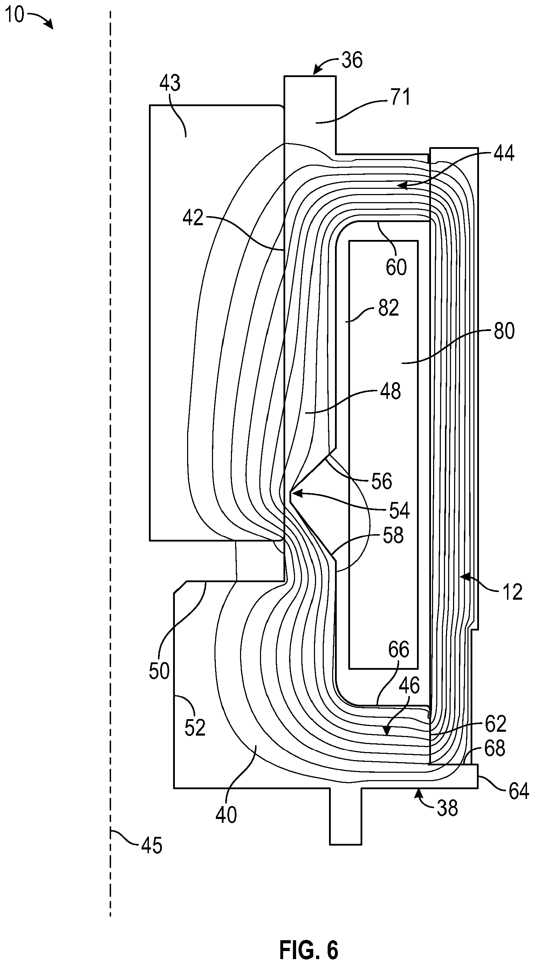

As illustrated in FIG. 6, the systems and methods an electromagnetic actuator having a unitary pole piece with a simplified housing described herein provide an electromagnetic actuator with improved magnetic efficiency over conventional actuators.. For example, the electromagnetic actuator 10 described herein can reduce the number of air gaps. That is, when the electromagnetic actuator 10 is assembled, the housing 12 is pressed onto the unitary pole piece 18, where the second flange 46 of the unitary pole piece 18 provides a press fit with the housing 12, and the first flange 44 provides a clearance fit with the housing 12, both of which can be dimensioned such that little or no air gap exists therebetween. As such, the illustrated non-limiting example comprises only two non-working air gaps. One of ordinary skill in the art understands that air gaps cause magnetic inefficiencies. Thus, minimizing the air gaps, in number or gap thickness, reduce these inefficiencies.

The method of assembly of the electromagnetic actuator 10 and construction of the dual-flanged unitary pole piece 18 can provide an improved magnetic flux path between the housing 12 and the unitary pole piece 18. For example, increasing the magnetic flux area of the air gaps can reduce magnetic inefficiencies. The dual-flanged unitary pole piece 18 with the first and second flanges 44, 46 extending radially outward therefrom, place the air gaps at a position that defines a large radius/diameter compared to conventional pole pieces. The position of the air gaps being at a larger radius increases the flux area of the air gaps, thus reducing the magnetic inefficiencies of the electromagnetic actuator 10.

The method of manufacturing the electromagnetic actuator 10 described herein can also improve the magnetic performance of the electromagnetic actuator 10. For example, insert molding the bobbin 82 around the unitary pole piece 18 can reduce the thickness of the walls of the bobbin 82. The thickness of the walls of the bobbin 82 can be reduced because the unitary pole piece 18 and the first and second flanges 44, 46 can provide the structure for the integrity of the coil bay, thus allowing for a larger coil bay. With a larger coil bay, the coil 80 can include more turns in the winding, leading to an increased magnetic performance. Additionally, the axial height of the first and second flanges 44, 46 can be increased owing to the reduced wall thickness of the bobbin 82. The larger flanges further increase the flux area of the air gaps, thus reducing the magnetic inefficiencies of the electromagnetic actuator 10. Further, the bobbin 82 being insert molded onto the unitary pole piece 18 reduces the overall number of tolerance considerations (i.e., tolerance stack) as the bobbin 82 is formed around the pole piece, as opposed to being pressed or installed as a part of a larger assembly.

The electromagnetic actuator 10 described herein can also provide an improved heat dissipation factor. For example, the press-fit between the housing 12 and the unitary pole piece 18 can minimize thermal resistance by allowing a thermal exchange therebetween (e.g., via metal to metal contact). The unitary pole piece can also reduce thermal resistance between the pole piece and the manifold by providing a large contact area therebetween (i.e., mounting surface 70) and a reduced number of individual components (i.e., pole piece is unitary and the heat can flow more readily from one end of the electromagnetic actuator to another). This improved heat dissipation factor can enable the coil winding to have higher resistances, or run at higher currents for a longer period of time without overheating, thus allowing the performance of the coil to be maximized.

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein.

Thus, while the invention has been described in connection with particular embodiments and examples, the invention is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein.
Various features and advantages of the invention are set forth in the following claims.

## Claims

1. A unitary pole piece for an electromagnetic actuator, the unitary pole piece comprising:
a first end defining an open top side;
a second end opposite the first end;
a first flange arranged adjacent to and extending radially outward from the first end;
a second flange extending radially outward from the second end; and
an armature recess extending at least partially through the unitary pole piece from the open top side towards the second end, the armature recess configured to slidably receive an armature.

2. The unitary pole piece of claim 1, wherein the armature recess of the unitary pole piece defines a base configured to provide a first end stop for the armature.

3. The unitary pole piece of any of the preceding claims, further comprising:
a first sidewall extending between the first flange and the second flange of the unitary pole piece, the first sidewall defining a choke portion.

4. The unitary pole piece of any of the preceding claims, further comprising:
a protrusion extending axially away from the second end of the unitary pole piece, the protrusion configured to secure a valve body to the unitary pole piece when the protrusion is crimped around the valve body.

5. An electromagnetic actuator including the unitary pole piece of claim 1, wherein the unitary pole piece is arranged within a housing of the electromagnetic actuator.

6. The electromagnetic actuator of claim 5, wherein the second flange is configured to provide a press fit to an inner surface of the housing.

7. The electromagnetic actuator of any of claim 5, wherein one of the first flange or the second flange defines a stepped profile.

8. The electromagnetic actuator of claim 7, wherein the stepped profile configured to provide an end stop for the housing when the electromagnetic actuator is in an assembled configuration.

9. The electromagnetic actuator of claim 5, wherein the electromagnetic actuator further comprises an end cap coupled to the first end of the unitary pole piece.

10. The electromagnetic actuator of claim 9, further comprising a second sidewall protruding axially above the first flange to receive the end cap.

11. The electromagnetic actuator of claim 9, wherein the end cap defines a seal to the open top side of the unitary pole piece.

12. The electromagnetic actuator of claim 11, wherein the end cap is press-fit to an outer surface of the open top side of the unitary pole piece.

13. The electromagnetic actuator of claim 9, wherein the end cap defines a second end stop for the armature.

14. The electromagnetic actuator of claim 9, wherein the electromagnetic actuator further comprises a bobbin positioned around the armature and arranged between the first flange and the second flange of the unitary pole piece.

15. The electromagnetic actuator of claim 14, wherein the bobbin is insert molded onto the unitary pole piece.
